# EUROPÄISCHE PATENTSCHRIFT

(11) **EP 2 052 433 B1**
(45) Veröffentlichungstag und Bekanntmachung des Hinweises auf die Patenterteilung: **23.12.2009**
(21) Anmeldenummer: 07801243.2
(22) Anmeldetag: 16.08.2007
(51) Int. Cl.: H01M 10/48, H01M 2/02, H01M 2/38, H01M 10/42, H01M 10/50

(54) **FLÜSSIGELEKTROLYTBATTERIE MIT ELEKTROLYTFÜLLSTANDSMESSUNG**
LIQUID ELECTROLYTE BATTERY HAVING AN ELECTROLYTE LEVEL MEASURING FEATURE
BATTERIE À ÉLECTROLYTE LIQUIDE, À MESURE DU NIVEAU D'ÉLECTROLYTE

(30) Priorität: 16.08.2006 DE 102006038050
(43) Veröffentlichungstag der Anmeldung: 29.04.2009
(73) Patentinhaber: IQ Power Licensing AG, 6300 Zug (CH)
(72) Erfinder: BAUER, C. Günther, 85521 Ottobrunn (DE); TSCHIRCH, Steffen, 09405 Zschopau (DE)
(74) Vertreter: Müller & Schubert
(86) Internationale Anmeldenummer: PCT/DE2007/001452
(87) Internationale Veröffentlichungsnummer: WO 2008/019675

(56) Entgegenhaltungen:
- EP-A- 0 524 377
- WO-A-2006/005313
- DE-A1- 19 823 916
- DE-A1- 19 834 740

## Beschreibung

Die Erfindung betrifft eine Flüssigelektrolytbatterie, wie z. B. eine Blei-Säure-Batterie, die z. B. als Starterbatterie in Fahrzeugen eingesetzt wird.

Das Bestreben der Fahrzeugindustrie nach Leichtbauweise betrifft auch die Einsparung von Batteriegewicht. Gleichzeitig steigt jedoch die Anforderung nach höherer Batterieleistung, da neben der zum Starten eines PKW benötigten Energie auch Energie für zusätzliche Aggregate, wie elektrische Fensterheber und Stellmotore zum Verstellen der Sitze oder auch zum elektrischen Beheizen der Sitze, benötigt wird. Ferner ist es wünschenswert, die Batterieleistung über die Lebensdauer der Batterie möglichst auf einem konstanten hohen Niveau zu halten, da zunehmend auch sicherheitsrelevante Funktionseinheiten wie Lenkung und Bremsen elektrisch gesteuert und betätigt werden. Unter Batterieleistung wird nachfolgend die Kapazität der Batterie sowie die Fähigkeit der Batterie zur Stromabgabe bzw. zur Stromaufnahme verstanden. Die Batterieleistung wird von verschiedenen, dem Fachmann bekannten Faktoren beeinflußt.

Aus dem Stand der Technik sind verschiedene Maßnahmen bekannt, um die Leistung einer Flüssigelektrolytbatterie, wie z. B. einer Blei-Säure-Batterie zu erhöhen. Ein besonderes Problem bei diesen Batterien ist, daß die Batterieleistung sehr stark von der Batterietemperatur abhängig ist. Im zulässigen Betriebsbereich ist mit einem Kapazitätsrückgang von ca. 0,6 bis 0,8 % oder mehr pro Grad Celsius zu rechnen. Wenn angenommen wird, daß die optimale Betriebstemperatur einer Batterie bei ca. 30 Grad Celsius liegt, und z.B. das Betätigen des Anlassers eines Fahrzeugs bei minus 20 Grad Celsius erfolgt, dann würde diese Batterie nur noch ca. 60 % ihrer Kapazität aufweisen.

Es ist jedoch dem Fachmann auch bekannt, daß weitere Einflußfaktoren die Kapazität der Batterie verringern. Ein wesentlicher Einflußfaktor ist die sogenannte Stratifikation der Säure, welche die Ungleichmäßigkeit der Säurekonzentration auf der Elektrodenfläche bezeichnet. Dadurch wird an Stellen mit einer zu hohen Säurekonzentration Korrosion an den Elektroden verursacht und somit die Lebensdauer der Batterie vermindert, dagegen an Stellen mit einer zu geringen Säurekonzentration nicht die theoretisch mögliche Batterieleistung erreicht.

Daher sind unterschiedliche Vorrichtungen und Verfahren entwickelt worden, um den Elektrolyten umzuwälzen, damit die Säurekonzentration in allen Volumenbereichen der Batterie gleich groß ist. Bei stationären Batterien wird z. B. Luft in den Elektrolyten eingeblasen. Für Fahrzeugbatterien sind Elektrolytdurchmischungsvorrichtungen bekannt, die als hydrostatische Pumpen bezeichnet werden. Es handelt sich dabei um strömungstechnische Hindernisse, welche die Flüssigkeit in eine vorbestimmte Richtung drängen. Diese Vorrichtungen sind nur bei sich bewegenden Fahrzeugen wirksam, da sie Brems- und Beschleunigungsvorgänge in Verbindung mit der Massenträgheitskraft des flüssigen Elektrolyten nutzen.

Diese Technik ist dem Fachmann bekannt, so daß lediglich beispielhaft auf die Dokumente US 4,963,444; US 5,096,787 und US 5,032,476 und DE 297 18 004.5 verwiesen wird.

Die Erwärmung einer Batterie ist eine weitere Möglichkeit der Elektrolytdurchmischung. Wenn eine Batterie an ihrer Unterseite oder im unteren Bereich der Seitenwände erwärmt wird, entsteht neben der beabsichtigten Erwärmung der Batterie auch eine vertikal nach oben verlaufende Konvektionsströmung des Elektrolyten, die ebenfalls zur Elektrolytdurchmischung beiträgt. Je stärker die Batterie erwärmt wird, um so stärker wird auch diese Konvektionsströmung. Die Konvektionsströmung wird durch einen Strömungskanal geleitet, der auch gleichzeitig zur dynamischen Durchmischung genutzt werden kann. Die durch Wärme induzierte Konvektionsströmung bewirkt, daß erwärmter Elektrolyt oberhalb des Strömungskanals austritt und sich mit dem kälteren Elektrolyt mischt.

Diese aus dem Dokument DE 19 823 916 bekannte Anordnung hat die Eigenschaft, daß der erwärmte Elektrolyt nur dann oberhalb des Strömungskanals austreten kann, wenn ein Mindestpegelstand des Elektrolyten eingehalten wird. Dieser Mindestpegelstand ist auch für die Funktion der dynamischen Durchmischung wichtig.

Somit besteht die Aufgabe der Erfindung darin, eine Flüssigelektrolytbatterie mit einer Vorrichtung zur Überwachung des Pegelstandes bereitzustellen. Weiterhin soll die Lösung besonders einfach, robust und kostengünstig sein.

Diese Aufgabe wird mit einer Flüssigelektrolytbatterie nach Anspruch 1 gelöst, die ein Gehäuse mit Seitenwänden, einem Boden und einer Abdeckung aufweist. In dem Gehäuse sind plattenförmige Elektroden senkrecht stehend angeordnet. Das Gehäuse ist mit Flüssigelektrolyt gefüllt, dessen Pegelstand über den Oberkanten der Elektrodenplatten liegt. An einer der Gehäusewände, zu der die Stirnseiten der Elektrodenplatten gerichtet sind, ist eine Flüssigelektrolyt-Umwälzvorrichtung angeordnet, die nachfolgende Merkmale aufweist: Eine Strömungskanalplatte ist parallel zu den senkrechten Kanten der Elektrodenplatten angeordnet. Dadurch wird zwischen der Strömungskanalplatte und der Gehäusewand ein Strömungskanal mit einem bestimmten Querschnitt ausgebildet. An der Außenseite der Gehäusewand ist im Bereich des unteren Endabschnitts des Strömungskanals eine Heizvorrichtung angeordnet. Weiterhin ist eine Ablaufplatte vorgesehen, die sich oberhalb des Pegelstandes waagerecht zur Gehäusemitte hin erstreckt und mit der Oberkante jeder Strömungskanalplatte verbunden ist.

Der Strömungskanalquerschnitt ist so ausgelegt, daß in Abhängigkeit von der Leistung der Heizvorrichtung eine Strömung entsteht, wodurch die nach oben strömende Elektrolytmenge aus dem Strömungskanal austritt, über die Ablaufplatte läuft und sich mit der in der Batterie verbliebenen Elektrolytmenge vermischt.

Erfindungsgemäß ist auf der Außenseite der Gehäusewand direkt oberhalb der Ablaufplatte ein elektrischer Temperatursensor befestigt, welcher mit einer Auswertelektronik verschaltet ist, die eine Temperaturgradientenmessung ermöglicht. Um festzustellen, ob in der betreffenden Batteriezelle ein ausreichend hoher Elektrolytpegelstand vorliegt, wird bei stehendem Fahrzeug, d. h. bei unbewegter Batterie die Heizvorrichtung eingeschaltet. Wenn der Pegelstand ausreichend hoch ist und der aufsteigende erwärmte Elektrolyt über die Ablaufplatte abläuft, erfolgt eine signifikante Temperaturänderung an dem Wandabschnitt des Batteriekastens, an dem der Temperatursensor befestigt ist. Wenn der Pegelstand nicht ausreichend hoch ist, kann der erwärmte und aufsteigende Elektrolyt nicht über die Ablaufplatte ablaufen. Demzufolge registriert der Temperatursensor keine signifikante Temperaturänderung. Dem Fachmann für elektrische Meßtechnik ist klar, wie die erforderliche Auswerteschaltung zu Erkennung von Temperaturgradienten aufzubauen ist.

Nach Anspruch 2 weist die Auswerteelektronik einen elektronischen Speicher auf, in dem typische Temperatur-Zeit-Verläufe gespeichert sind, die den Temperaturverlauf am Sensor nach dem Einschalten der Heizvorrichtung kennzeichnen, wobei eine erste Gruppe der gespeicherten Temperatur-Zeit-Verläufe auf eine Normalfunktion der thermischen Durchmischung und somit gleichzeitig auf einen ausreichend hohen Elektrolytpegel hinweist, eine zweite Gruppe auf eine Fehlfunktion der thermischen Durchmischung und somit gleichzeitig auf einen zu geringen Elektrolytpegel hinweist. Nach der Messung des Temperatur-Zeit-Verlaufs erfolgt ein Vergleich, mit dem bestimmt wird, ob der gemessene Temperatur-Zeit-Verlauf der ersten oder der zweiten Gruppe der gespeicherten Temperatur-Zeit-Verläufe zuzuordnen ist. Weitere Ausgestaltungen und Vorteile der Erfindung ergeben sich aus der nachfolgenden Beschreibung des Ausführungsbeispiels in Verbindung mit den beigefügten schematischen Zeichnungen.
- Fig. 1: zeigt eine Schnittansicht der erfindungsgemäßen Batteriezelle mit einem normalen Pegelstand
- Fig. 2: zeigt die in Figur 1 dargestellte Schnittansicht der erfin- dungsgemäßen Batteriezelle mit einem zu niedrigen Pegel- stand.
- Fig. 3: zeigt einen leeren Batteriekasten nach dem Stand der Technik.

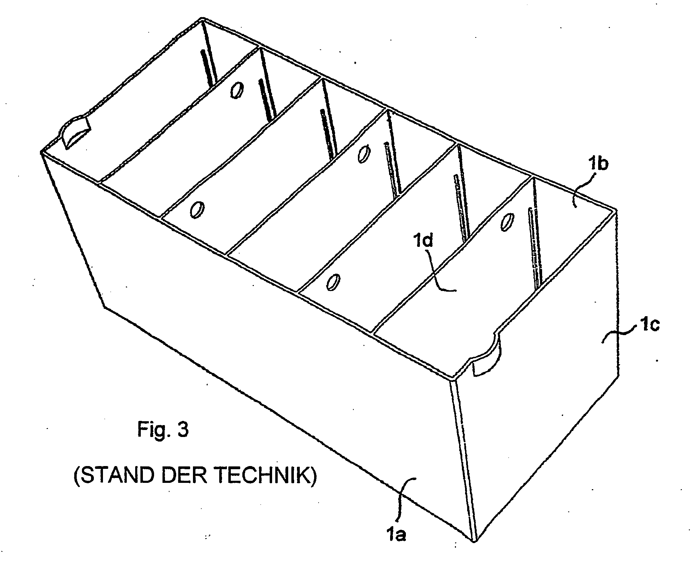

Die nachfolgende Erläuterung der Erfindung beginnt mit dem Stand der Technik nach Fig. 3, da dadurch die Erfindung leichter verständlich wird.

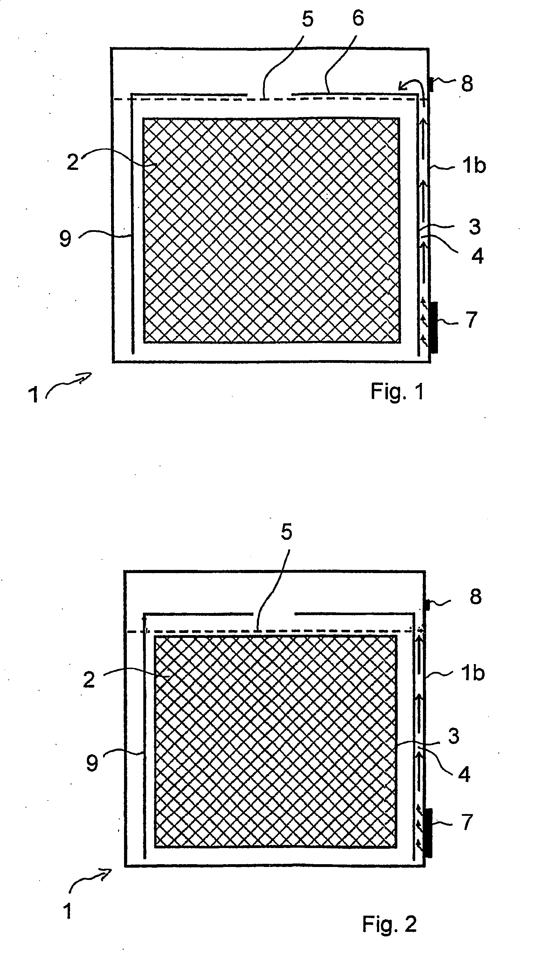

Die Fig. 3 zeigt einen Batteriekasten mit 6 Zellen, welche mit dem Bezugszeichen 1c gekennzeichnet sind. Alle nachfolgenden Erläuterungen beziehen sich auf eine dieser Zellen, welche in den Figuren 1 und 2 als Schnittansicht dargestellt ist. Da diese einzelne Zelle auch eine eigenständige Batterie ist, wird nachfolgend nur noch von einer Batterie gesprochen, da die Erfindung sowohl auf eine einzelne Zelle als auch auf die Kombination von mehreren Zellen anwendbar ist.

Nach Fig. 1 ist zwischen der senkrechten rechten Gehäusewand 1 b und der rechten Seitenkante jeder Elektrodenplatte 2 eine Strömungskanalplatte 3 angeordnet, so daß zwischen dieser und der rechten Gehäusewand 1 b ein Strömungskanal 4 ausgebildet ist. Die Oberkante der Strömungskanalplatte 3 liegt im Bereich des Elektrolytpegelstandes 5 und ist mit einer Ablaufplatte 6 verbunden, die sich parallel zur Oberkante jeder Elektrodenplatte 2 zur Gehäusemitte hin erstreckt. An der Außenseite der Gehäusewand 1 b ist im unteren Endabschnitt des Strömungskanals 4 eine Widerstandsheizung 7 angeordnet. Diese Widerstandsheizung 7 verursacht eine thermische Konvektion des Elektrolyten. Bei eingeschalteter Heizung 7 strömt erwärmter Elektrolyt nach oben, schwappt über die Oberkante der Strömungsplatte 3 und läuft über die Ablaufplatte 6 ab, wie durch die Pfeile angedeutet. Dabei wird vom Temperatursensor 8, der kurz oberhalb der Ablaufplatte 6 befestigt ist, ein signifikanter Temperaturanstieg ermittelt, was auf eine Normalfunktion der Durchmischungsvorrichtung und somit auf einen ausreichenden Pegelstand des Elektrolyten hinweist. Wenn jedoch, wie in Figur 2 gezeigt, der Pegelstand des Elektrolyten zu niedrig ist, kommt es zu keinem Überschwappen, so daß der Temperatursensor 8 keinen signifikanten Temperaturanstieg erfaßt.

Der in Fig. 1 und 2 auf der linken Seite angedeutete, mit dem Bezugszeichen 9 gekennzeichnete Winkel dient nur zur Durchmischung des Elektrolyten, wenn die Batterie bewegt wird.

Mit der Erfindung erfolgt eine Mehrfachnutzung vorhandener Bauelemente und Sensoren. Die beschriebene Batterie hat eine Heizung und benötigt einen Temperatursensor zur Messung der Innentemperatur der Batterie, die meist in einem Isoliergehäuse angeordnet ist. Durch die erfindungsgemäße Anordnung des Temperatursensors kann daher mit dem gleichen Sensor sowohl die Innentemperatur der Batterie gemessen, als auch der Elektrolytpegelstand überwacht werden.

Die beschriebene Ausführungsform ist nur eine der möglichen Ausführungsformen der Erfindung. An Hand der beschriebenen Ausführungsformen kann der Fachmann die technische Lehre der vorliegenden Erfindung vollständig entnehmen. Es ist klar, daß diese Ausführungsformen durch einen Fachmann mit Hilfe der erfindungsgemäßen Lehre weiterentwickelt und modifiziert oder kombiniert werden können. Daher fallen auch diese, nicht explizit genannten oder gezeigten weiteren Ausführungsformen in den Schutzbereich der nachfolgenden Patentansprüche.

## Patentansprüche

1. Flüssigelektrolytbatterie, die aufweist:
- ein Gehäuse **(1)** mit Seitenwänden **(1a, 1b, 1c, 1d),** einem Gehäuseboden und einer Abdeckung,
- Elektrodenplatten **(2),** die senkrecht stehend in dem Gehäuse **(1)** angeordnet sind,
- einen Flüssigelektrolyten, dessen Pegelstand **(5)** in dem Gehäuse **(1)** bis über die Oberkante der Elektrodenplatten **(2)** reicht und
- eine Flüssigelektrolyt-Umwälzvorrichtung, die wenigstens nachfolgende Merkmale aufweist:
- eine Strömungskanalplatte **(3),** die parallel zur senkrechten Kante jeder Elektrodenplatte **(2)** angeordnet ist und zusammen mit der Seitenwand 1 b des Batteriegehäuses einen Strömungskanal **(4)** mit einem vorbestimmten Querschnitt ausbildet, durch welchen von unten nach oben eine Konvektionsströmung geleitet wird,
- eine Ablaufplatte **(6),** die sich oberhalb des Pegelstandes **(5)** zur Gehäusemitte hin erstreckt und mit der Oberkante der Strömungskanalplatte **(3)** verbunden ist und
- eine Heizung **(7),** die an der Außenseite der Gehäusewand **(1b)** im unteren Abschnitt des Strömungskanals **(4)** angeordnet ist,
**dadurch gekennzeichnet, daß**
- auf der Außenseite der Gehäusewand **(1b)** direkt oberhalb Ablaufplatte **(6)** ein Temperatursensor **(8)** befestigt ist, welcher mit
- einer Auswertelektronik verschaltet ist, die eine Temperaturgradientenmessung ermöglicht.

2. Batterie nach Anspruch 1, **dadurch gekennzeichnet, daß** die Auswerteelektronik einen elektronischen Speicher aufweist, in dem typische Temperatur-Zeit-Verläufe gespeichert sind, die den Temperaturverlauf am Temperatursensor **(8)** nach dem Einschalten der Heizung **(7)** kennzeichnen, wobei eine erste Gruppe der gespeicherten Temperatur-Zeit-Verläufe auf eine Normalfunktion der thermischen Durchmischung und somit auf einen ausreichend hohen Elektrolytpegel hinweist und eine zweite Gruppe auf eine Fehlfunktion der thermischen Durchmischung und somit auf einen zu geringen Elektrolytpegel hinweist, wobei eine Erkennungsvorrichtung vorgesehen ist, die eine Normalfunktion von einer Fehlfunktion unterscheidet und die Fehlfunktion signalisiert.

## Claims

1. Electrolytic battery which comprises:
- a case **(1)** having side walls **(1a, 1b, 1c, 1d),** a bottom and a cover,
- electrode plates **(2)** vertically arranged in the case **(1),**
- a liquid electrolyte, the level **(5)** of which being above the top edges of the electrode plates **(2),** and
- a device for circulating the electrolyte, which comprises at least the following features:
- a channel plate **(3)** which is arranged in parallel with the vertical edge of each of the electrode plates and, together with the side wall **(1b)** of battery case, forms a flow channel **(4)** having a predetermined cross section, through which a convective flow is guided from bottom to top,
- a drain plate **(6)** connected with the top edge of the channel plate **(3)** and extending above the level of electrolyte **(5)** towards the center of battery case, and
- a heater **(7)** arranged on the outside surface of the side wall **(1b)** in the area of the lower portion of the flow channel **(4),**
**characterized in that**
- a temperature sensor **(8)** is arranged on the outside surface of the side wall **(1b)** immediately above the drain plate **(6),** which is connected to
- an electronic evaluating unit enabling temperature gradients to be measured.

2. Battery according to claim 1, **characterized in that** the electronic evaluating unit comprises a memory in which typical temperature-time curves are stored, which represent the temperature variations at the temperature sensor **(8)** when the heater **(7)** is switched on, wherein a first group of these temperature-time curves stored in the memory point to a normal function of thermal intermixing and thus, to a sufficiently high level of electrolyte, while a second group of these curves points to a malfunction of thermal intermixing and thus, to an electrolyte level being too low, wherein a recognition device is provided, which is capable of distinguishing between a normal function and a malfunction of thermal intermixing and which signalizes when a malfunction is detected.

## Revendications

1. Batterie à électrolyte liquide présentant :
- Un boîtier (1) avec parois latérales (1a, 1b, 1c, 1d) un fond et un couvercle
- Des plaques à électrodes (2) disposées à la verticale dans le boîtier (1)
- Un électrolyte liquide, dont le niveau (5) dans le boîtier (1) dépasse le rebord supérieur des plaques à électrodes (2) et
- Un dispositif de circulation d'électrolyte liquide présentant au moins les caractéristiques suivantes :
- Une plaque de canal d'écoulement (3) disposée en parallèle au bord vertical de chaque plaque à électrodes (2) et qui avec la paroi latérale 1b du boîtier de la batterie forme un canal d'écoulement (4) ayant une section prédéfinie, par lequel passe un courant de convection du bas vers le haut,
- Une plaque de vidange (6) s'étirant au-dessus du niveau (5) vers le centre du boîtier et qui est reliée au bord supérieur de la plaque de canal d'écoulement (3) et
- Un chauffage (7) disposé sur le côté extérieur de la paroi du boîtier (1 b) dans la partie inférieure du canal d'écoulement (4)
**caractérisée en ce que**
- Sur le côté extérieur de la paroi du boîtier (1 b) juste au-dessus de la plaque de vidange (6) est fixée une sonde thermique (8), laquelle
- Est connectée à une électronique d'évaluation permettant une mesure des gradients thermiques.

2. Batterie selon la revendication 1, **caractérisée en ce que** l'électronique d'évaluation présente une mémoire électronique dans laquelle sont enregistrés des déroulements de temps de température qui indiquent le déroulement thermique sur la sonde thermique (8) après l'allumage du chauffage, sachant qu'un premier groupe de déroulement de temps de température enregistré renvoie à un fonctionnement normal du mélange thermique et ainsi à un niveau d'électrolyte suffisamment élevé et qu'un second groupe renvoie à un dysfonctionnement du mélange thermique et ainsi à un niveau d'électrolyte trop faible, sachant qu'un dispositif de reconnaissance est prévu, lequel distingue un fonctionnement normal d'un dysfonctionnement et signale tout dysfonctionnement.
